# FASCICULE DE BREVET EUROPEEN

(11) **EP 3 181 977 B1**
(45) Date de publication et mention de la délivrance du brevet: **01.05.2019**
(21) Numéro de dépôt: 16204145.3
(22) Date de dépôt: 14.12.2016
(51) Int. Cl.: F16L 37/098, F16L 37/14

(54) **PROCEDE DE FABRICATION D'UNE CANALISATION**
HERSTELLUNGSVERFAHREN EINER KANALISATION
METHOD FOR MANUFACTURING A PIPE

(30) Priorité: 18.12.2015 FR 1562798
(43) Date de publication de la demande: 21.06.2017
(73) Titulaire: Stelia Aerospace, 17300 Rochefort (FR)
(72) Inventeur: SIREUDE, Damien, 44300 NANTES (FR)
(74) Mandataire: Argyma

(56) Documents cités:
- EP-A1- 0 319 400
- WO-A1-97/24545
- DE-A1-102010 010 929
- FR-A1- 2 622 671
- US-A1- 2005 063 125

## Description

### DOMAINE TECHNIQUE GENERAL ET ART ANTERIEUR

La présente invention concerne le domaine des circuits de fluide dans un aéronef, par exemple, un circuit d'eau potable, d'eaux usées, de drainage, etc.

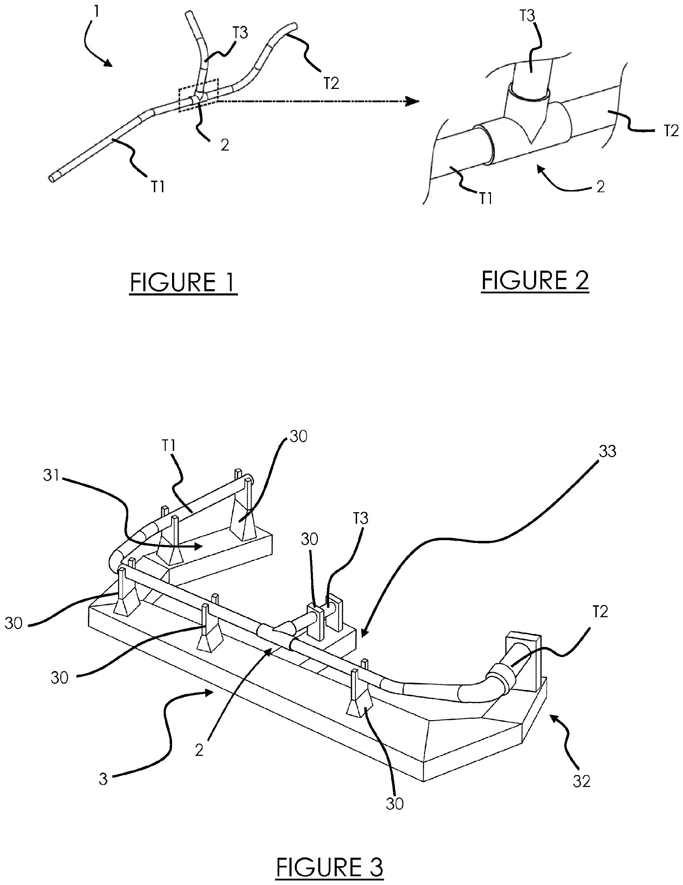

US 2005/0063125 A montre un ensemble d'un raccord et d'une canalisation, le raccord comportant un organe de connexion rapide mécanique qui comporte un mécanisme de détrompage angulaire coopérant avec un organe de connexion rapide mécanique de la canalisation. De manière connue, un circuit de fluide comporte une pluralité de canalisations reliées mécaniquement et fluidiquement entre elles. A titre d'exemple, en référence aux figures 1 et 2, il est représenté un circuit de fluide 1 comportant trois canalisations T1, T2, T3 connectées entre elles au niveau d'un raccord de connexion 2. Dans un aéronef, les canalisations T1, T2, T3 sont généralement incurvées par cintrage afin de s'adapter à la configuration de l'aéronef dans lequel elles doivent être montées.

Le raccordement de canalisations cintrées T1, T2, T3 est complexe à mettre en oeuvre étant donné qu'il nécessite de réaliser un sertissage, un soudage ou un collage du raccord de connexion 2 auxdites canalisations cintrées T1, T2, T3 ou un soudage direct des canalisations T1, T2, T3 entre elles. Lors du raccordement, il est nécessaire d'orienter et de maintenir fixement les canalisations cintrées T1, T2, T3 et ledit raccord de connexion 2 au moyen d'un dispositif de calage, appelé également «gabarit». Comme illustré à la figure 3, un dispositif de calage 3 est réalisé sur mesure et possède une forme adaptée aux canalisations cintrées T1, T2, T3. Autrement dit, pour chaque type de circuit de fluide et chaque forme de canalisations T1, T2, T3, il est nécessaire de prévoir un dispositif de calage 3 adapté, ce qui nécessite un investissement important et une gestion des gabarits contraignante. De plus, le raccordement nécessite de nombreuses étapes de manipulation, de positionnement, de bridage et d'assemblage qui augmentent la durée d'un raccordement et donc son coût.

Dans cet exemple, toujours en référence à la figure 3, le dispositif de calage 3 comporte trois branches 31, 32, 33 pour coopérer respectivement avec les canalisations T1, T2, T3. En outre, chaque branche 31, 32, 33 comporte des organes de support 30 de dimensions adaptées au cintrage de chaque canalisation T1, T2, T3. Un tel dispositif de calage 3 permet en outre de définir précisément l'orientation angulaire entre les canalisations T1, T2, T3 lors du raccordement.

Un tel procédé de raccordement est onéreux et complexe à mettre en oeuvre étant donné qu'il nécessite de fabriquer un dispositif de calage pour chaque type de raccordement.

Par ailleurs, en cas de défaut, il est nécessaire de mettre au rebut les canalisations T1-T3 ainsi que le raccord de connexion 2, ce qui présente un inconvénient important.

L'invention a donc pour but d'éliminer au moins certains de ces inconvénients en proposant un nouveau procédé de fabrication afin de réaliser un circuit de fluide pour aéronef de manière rapide et pratique tout en limitant les coûts.

### PRESENTATION GENERALE DE L'INVENTION

L'invention concerne un procédé de fabrication d'une canalisation comportant un corps tubulaire creux cintré comprenant deux ouvertures d'extrémité reliées fluidiquement et au moins un deuxième organe de connexion rapide mécanique, au niveau d'une ouverture d'extrémité, adapté pour coopérer avec un premier organe de connexion rapide mécanique d'un raccord de connexion comprenant un mécanisme de détrompage angulaire, ledit deuxième organe de connexion rapide mécanique comportant un mécanisme de détrompage angulaire adapté pour coopérer avec le mécanisme de détrompage angulaire du premier organe de connexion rapide mécanique du raccord selon une position angulaire prédéterminée, le procédé comportant :
- une étape de solidarisation du deuxième organe de connexion rapide mécanique à un corps tubulaire creux rectiligne,
- une étape de positionnement du corps tubulaire creux rectiligne dans une machine de cintrage de manière à ce que le mécanisme de détrompage angulaire du deuxième organe de connexion rapide mécanique soit dans une position angulaire de référence par rapport à ladite machine de cintrage et
- une étape de cintrage du corps tubulaire creux rectiligne en fonction de
ladite position angulaire de référence pour former le corps tubulaire creux cintré.

Grâce au procédé, on réalise le cintrage par rapport au deuxième organe de connexion, c'est-à-dire, par rapport à son orientation d'assemblage avec le raccord de connexion. Un tel procédé offre une grande flexibilité pour la fabrication de canalisations tout en améliorant l'assemblage sans utilisation de gabarit de calage. De manière avantageuse, une telle flexibilité lors de la fabrication des canalisations permet d'utiliser des raccords de connexion de formes standardisées et dont le coût est réduit.

De préférence, la machine de cintrage comporte un mécanisme de détrompage adapté pour coopérer avec le mécanisme de détrompage angulaire du deuxième organe de connexion rapide mécanique dans la position angulaire de référence. Ainsi, le deuxième organe de connexion rapide mécanique est positionné de manière précise et rigoureuse dans la machine de cintrage. La canalisation peut être cintrée en tenant compte de sa future connexion.

Selon une autre forme de réalisation, le deuxième organe de connexion est monté après cintrage
De préférence, l'étape de positionnement du corps tubulaire creux rectiligne dans la machine de cintrage est réalisée manuellement. Ainsi, un opérateur place de manière précise la canalisation selon l'orientation souhaitée, en particulier, au moyen d'un gabarit.

De préférence, l'étape de cintrage est réalisée en fonction de l'inclinaison de l'angle de cintrage par rapport à la position angulaire de référence déterminée. Autrement dit, la portion cintrée la plus proche du deuxième organe de connexion rapide mécanique est déterminée en fonction de l'orientation dudit deuxième organe de connexion rapide mécanique. Ainsi, lorsque plusieurs canalisations sont assemblées ensemble au moyen d'un raccord, celles-ci sont parfaitement positionnées les unes par rapport aux autres. La machine tient avantageusement compte de l'orientation de la canalisation lors de la réalisation du cintrage afin que la canalisation ne puisse se connecter que selon une orientation prédéterminée.

De manière avantageuse, grâce à l'invention, il est simple et rapide de former un circuit de fluide comportant plusieurs canalisations raccordées ensemble. De manière avantageuse, le raccordement est réalisé sans outillage, de manière manuelle. De plus, la position angulaire relative entre le raccord et la canalisation à raccorder est définie de manière précise du fait du mécanisme de détrompage angulaire, ce qui permet avantageusement de ne plus recourir à un dispositif de calage selon l'art antérieur. La position angulaire relative est avantageusement définie lors de la fabrication de la canalisation de circuit de fluide. Le raccord de connexion remplit avantageusement une double fonction et permet, d'une part, de relier fluidiquement plusieurs canalisations et, d'autre part, d'assurer un positionnement angulaire relatif précis.

De préférence, le premier organe de connexion rapide mécanique est configuré pour coopérer avec le deuxième organe de connexion rapide mécanique par emboîtement, en particulier, selon l'axe de l'ouverture qui doit être raccordée. Un tel raccordement est simple à mettre en oeuvre et ne nécessite que peu de manipulations du raccord ou de la canalisation. Le risque d'endommagement lors du raccordement est limité.

De préférence, le premier organe de connexion rapide mécanique est configuré pour se verrouiller automatiquement avec le deuxième organe de connexion rapide mécanique lors de la coopération.

Selon un aspect, le premier organe de connexion rapide mécanique est adapté pour coopérer de manière définitive avec le deuxième organe de connexion rapide mécanique de manière à former une connexion robuste et pérenne.

Selon un autre aspect, le premier organe de connexion rapide mécanique est adapté pour coopérer de manière amovible avec le deuxième organe de connexion rapide mécanique. Ainsi, une canalisation comportant un défaut peut avantageusement être démontée, par exemple pour une opération de maintenance, et remplacée si nécessaire par une canalisation neuve.

De préférence, le raccord comprend au moins trois ouvertures.

De préférence, toutes les ouvertures comportent un premier organe de connexion rapide mécanique. Ainsi, le circuit de fluide est formé de manière rapide par simple assemblage des canalisations sur le raccord de connexion.

Selon un aspect, tous les premiers organes de connexion rapide mécanique sont identiques, ce qui facilite l'industrialisation. Selon un autre aspect, les organes de connexion rapide mécanique sont différents. Ainsi, chaque canalisation ne peut coopérer qu'avec une unique canalisation, ce qui évite tout assemblage erroné.

Le deuxième organe de connexion rapide mécanique permet de définir l'orientation angulaire avec le raccord de connexion. Ainsi, l'orientation angulaire relative du deuxième organe de connexion par rapport au corps tubulaire de la canalisation définit une orientation angulaire relative par rapport au raccord de connexion. Autrement dit, l'orientation angulaire relative du deuxième organe de connexion rapide mécanique permet de déterminer la forme du circuit de fluide lors de l'assemblage, ce qui est avantageux.

De préférence, la canalisation comporte un deuxième organe de connexion rapide au niveau de chaque ouverture.

De préférence, chaque deuxième organe de connexion rapide mécanique de la canalisation comporte un mécanisme de détrompage angulaire. Ainsi, l'assemblage d'un circuit de fluide complexe est simple à mettre en oeuvre.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un circuit de fluide comportant trois canalisations raccordées selon l'art antérieur ;
- la figure 2 est une vue rapprochée du raccord de la figure 1 ;
- la figure 3 est une représentation schématique de canalisations montées dans un dispositif de calage selon l'art antérieur au cours d'un procédé de raccordement ;
- la figure 4 est une représentation schématique d'un raccord de connexion et de deux canalisations qui ne font pas partie de l'objet des revendications;
- les figures 5 et 6 sont des représentations schématiques d'un raccord de connexion et de trois canalisations qui ne font pas partie de l'objet des revendications;
- la figure 7 est une représentation schématique du raccordement d'une canalisation à un raccord selon une position angulaire déterminée ;
- la figure 8 est une représentation schématique d'un circuit de fluide comportant trois canalisations raccordées selon l'invention ; et
- les figures 9 et 10 sont des exemples schématiques de mécanismes de détrompage.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

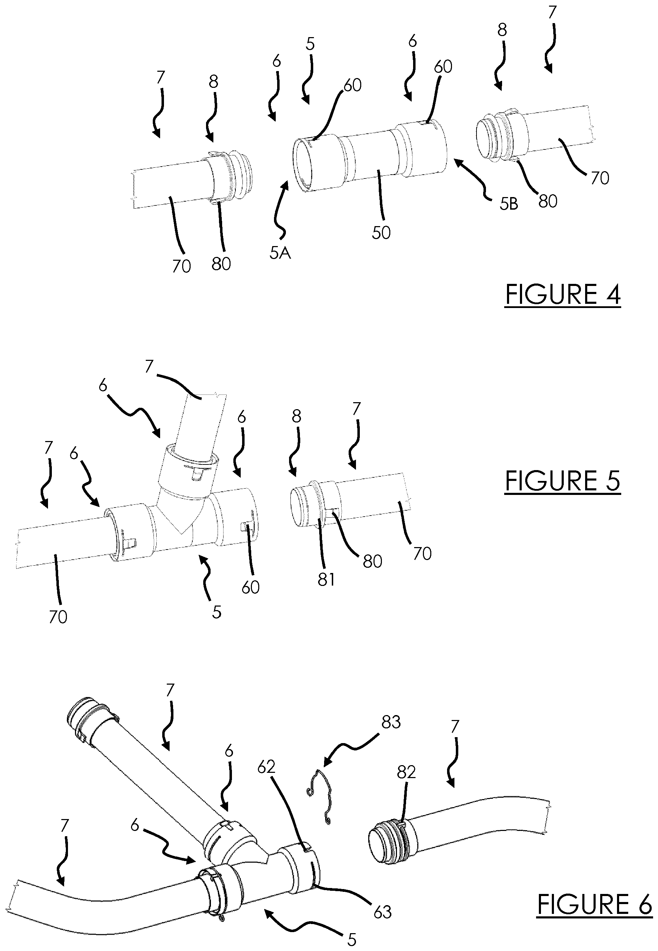

En référence à la figure 4, il est représenté un raccord de connexion 5 selon l'invention pour relier deux canalisations 7 selon l'invention et former ainsi un circuit de fluide.

Dans cet exemple, le raccord de connexion 5 comprend un corps creux 50 comprenant deux ouvertures 5A-5B reliées fluidiquement entre elles. Le raccord 5 possède un corps droit 50 pour relier entre elles les deux canalisations 7, les ouvertures 5A-5B étant formées aux extrémités du corps 50. De préférence, chaque ouverture 5A-5B possède une section annulaire. Il va de soi que l'invention s'applique également à un raccord de connexion 5 pouvant raccorder plus de deux canalisations 7, en particulier 3 comme illustré aux figures 5 et 6.

Le raccord de connexion 5 comporte, au niveau de chaque ouverture 5A-5B, un premier organe de connexion rapide mécanique 6 adapté pour coopérer de manière étanche avec un deuxième organe de connexion rapide mécanique 8 d'une canalisation 7 de circuit de fluide d'aéronef comme illustré à la figure 4. La canalisation 7 sera présentée par la suite.

La coopération desdits organes de connexion rapide mécanique 6, 8 permet de former un raccord rapide, de préférence, par emboitement mécanique. De manière préférée, l'étanchéité est garantie pour une plage de pression interne comprise entre - 980 mbar (-98 kPa) et 30 bars (3000 kPa). Les organes de connexion rapide mécanique 6, 8 sont de préférence du type mâle/femelle.

De manière préférée, les premiers organes de connexion rapide mécanique 6 du raccord de connexion 5 sont du type « femelle » tandis que les deuxièmes organes de connexion rapide mécanique 8 des canalisations 7 sont du type « mâle ». Néanmoins, il va de soi que l'inverse pourrait également être possible. De même, un raccord de connexion 5 peut également comprendre, à une ouverture, un premier organe de connexion rapide mécanique 6 du type « mâle » et, à une autre ouverture, un premier organe de connexion rapide mécanique 6 du type « femelle ».

Dans cet exemple, chaque premier organe de connexion rapide mécanique 6 est adapté pour coopérer de manière amovible avec un deuxième organe de connexion rapide mécanique 8. Ainsi, une canalisation 7 endommagée ou comportant un défaut peut être remplacée de manière rapide. Il va de soi qu'une telle connexion amovible est optionnelle. En particulier, les organes de connexion 6, 8 peuvent coopérer de manière définitive afin d'empêcher tout désassemblage.

Selon un aspect préféré, les premiers organes de connexion rapide mécanique 6 et les deuxièmes organes de connexion rapide mécanique 8 se verrouillent par clipsage, encliquetage ou vissage.

En référence aux figures 4 et 5, le deuxième organe de connexion rapide mécanique 8 de la canalisation 7 comporte deux ergots 80, diamétralement opposés, et le premier organe de connexion rapide mécanique 6 du raccord 5 comporte deux orifices 60, diamétralement opposés, pour coopérer avec lesdits ergots 80 et ainsi permettre simultanément un emboitement étanche et une solidarisation. En cas de besoin, en référence à la figure 5, le deuxième organe de connexion rapide mécanique 8 peut également comporter un joint d'étanchéité 81.

Selon une autre forme de réalisation, en référence à la figure 6, le deuxième organe de connexion rapide mécanique 8 de la canalisation 7 comporte deux doigts d'insertion 82 et le premier organe de connexion rapide mécanique 6 du raccord 5 comporte deux encoches 62 pour coopérer avec lesdits doigts d'insertion 82 et ainsi permettre un emboitement étanche et empêcher toute rotation entre lesdits organes de connexion 6, 8. En référence à la figure 6, un organe de blocage 83 est monté sur lesdits organes 6, 8 pour empêcher tout désassemblage. Dans cet exemple, l'organe de blocage 83 est un élément métallique en forme de U et le premier organe de connexion rapide mécanique 6 du raccord 5 comporte une fente 63 adaptée pour recevoir ledit élément métallique 83 et verrouiller ensemble des organes de connexion 6, 8.

Le raccord de connexion 5 est de manière préférée monobloc. Il est de préférence réalisé en métal ou en plastique. De manière avantageuse, on définit une gamme comportant un nombre limité de types de raccords de connexion afin de pouvoir raccorder ensemble un nombre différent de canalisations selon plusieurs orientations différentes. De manière avantageuse, les raccords de connexion 5 peuvent être standardisés, ce qui en diminue le coût.

En référence à la figure 4, la canalisation 7 comporte, pour sa part, un corps tubulaire creux cintré 70 comprenant deux ouvertures d'extrémité reliées fluidiquement et au moins un deuxième organe de connexion rapide 8, fixé au niveau d'une ouverture d'extrémité, adapté pour coopérer avec le premier organe de connexion rapide 6 du raccord de connexion 5. La canalisation 7 peut être métallique ou en plastique.

Ainsi, sans outil, un opérateur peut assembler plusieurs canalisations 7 en utilisant un raccord de connexion 5 et former ainsi un circuit de fluide.

De manière avantageuse, le premier organe de connexion rapide mécanique 6 comporte un mécanisme de détrompage angulaire configuré pour permettre une coopération avec le deuxième organe de connexion rapide mécanique 8 selon une position angulaire prédéterminée. Le mécanisme de détrompage permet ainsi d'interdire toute rotation relative entre les organes de connexion rapide 6, 8 et, plus généralement, entre une canalisation 7 et son raccord de connexion 5.

La liaison d'une canalisation 7 et d'un raccord de connexion 5 n'est ainsi rendue possible qu'en emboîtant la canalisation 7 avec le raccord de connexion 5 pour une position angulaire prédéterminée.

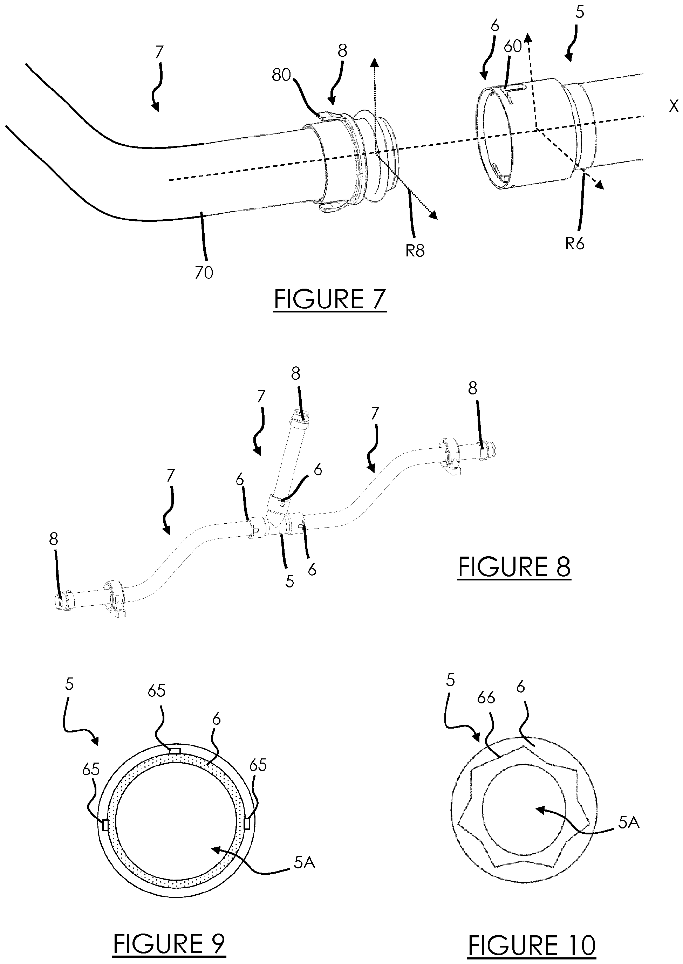

En référence à la figure 7, l'ouverture d'une canalisation cintrée 7 est alignée avec l'ouverture 5A du raccord de connexion 5 selon un axe X. Le premier organe de connexion 6 comporte un mécanisme de détrompage définissant un premier référentiel R6 tandis que le deuxième organe de connexion 8 comporte un mécanisme de détrompage définissant un deuxième référentiel R8. Afin de permettre un emboîtement, le premier référentiel R6 doit être aligné avec le deuxième référentiel R8. Autrement dit, lors de l'assemblage, la position angulaire de la canalisation 7 est parfaitement définie par rapport à celle du raccord de connexion 5. Si un des référentiels R6, R8 est décalé angulairement, aucun n'emboitement n'est possible.

De manière préférée, tous les organes de connexion 6, 8 sont équipés d'un mécanisme de détrompage. Ainsi, le circuit de fluide, obtenu par raccordement de plusieurs canalisations 7, possède une forme déterminée de manière précise. Le raccord de connexion 5 possède ainsi une double fonction en permettant, d'une part, d'assurer une liaison mécanique étanche et, d'autre part, d'assurer un positionnement angulaire précis des canalisations 7. Le raccord de connexion 5 rend ainsi inutile l'utilisation d'un dispositif de calage tel que présenté précédemment en référence à la figure 3.

A titre d'exemple, en référence aux figures 9 et 10, il va être représenté plusieurs formes de mécanismes de détrompage. En référence à la figure 9, le mécanisme de détrompage comporte trois éléments d'orientation 65 espacés de 90° à la périphérie d'une ouverture 5A du raccord de connexion 5. Dans ce cas, le deuxième organe de connexion rapide 8 comporte trois éléments d'orientation complémentaires (non représentés) espacés de 90° à la périphérie d'une ouverture de la canalisation 7. Les éléments d'orientation 65 peuvent se présenter sous la forme d'ergots, de doigts d'insertions, d'encoches, d'orifices, etc. Il va de soi que le nombre d'éléments d'orientation 65 pourrait être différent ainsi que leur position, leur géométrie et leur localisation sur le premier ou le deuxième organe de connexion rapide 6, 8.

En référence à la figure 10, le mécanisme de détrompage comporte une empreinte 66 formée à la périphérie d'une ouverture 5A du raccord de connexion 5. Dans ce cas, le deuxième organe de connexion rapide 8 comporte une empreinte (non représenté) de forme complémentaire à la périphérie d'une ouverture de la canalisation 7. L'empreinte 66 comporte un méplat de manière à ne permettre l'emboîtement avec l'empreinte de forme complémentaire que pour une unique position angulaire prédéterminée. Il va de soi que le mécanisme de détrompage angulaire pourrait se présenter sous des formes diverses.

Grâce aux mécanismes de détrompage, un premier organe de connexion 6 du raccord de connexion 5 ne peut se connecter à un deuxième organe de connexion 8 d'une canalisation 7 que si le deuxième organe de connexion 8 est dans l'orientation angulaire définie par le premier organe de connexion 6.

Afin d'obtenir un circuit de fluide de forme désirée, il est important de définir l'orientation angulaire du corps tubulaire creux cintré 70 de la canalisation 7 par rapport à l'orientation angulaire de son deuxième organe de connexion 8. A cet effet, un procédé de fabrication d'une canalisation 7 va être dorénavant présenté.

A titre d'exemple, le procédé de fabrication d'une canalisation 7 comporte :
- une étape de solidarisation d'un deuxième organe de connexion rapide mécanique 8 à un corps tubulaire creux rectiligne,
- une étape de positionnement du corps tubulaire creux rectiligne dans une machine de cintrage de manière à ce que le mécanisme de détrompage angulaire du deuxième organe de connexion rapide mécanique 8 soit dans une position de référence déterminée par rapport à ladite machine de cintrage et
- une étape de cintrage du corps tubulaire creux rectiligne en fonction de ladite position de référence déterminée.

Grâce au procédé de fabrication, la position angulaire du deuxième organe de connexion rapide mécanique 8 est parfaitement définie par rapport au corps tubulaire creux cintré 70 étant donné que le cintrage est réalisé par rapport à la position angulaire du deuxième organe de connexion rapide mécanique 8. Autrement dit, la fabrication de la canalisation 7 est réalisée en tenant compte de son raccordement futur.

L'étape de solidarisation du deuxième organe de connexion 8 à un corps tubulaire creux rectiligne est rapide et simple à mettre en oeuvre, par exemple, par sertissage, collage ou soudage. Une telle solidarisation peut être réalisée de manière simplifiée étant donné qu'elle est réalisée sur des corps tubulaires rectilignes.

Un tel procédé de fabrication est particulièrement avantageux pour fabriquer un circuit de fluide de forme complexe étant donné qu'il permet de former des canalisations dont le cintrage est contrôlé et dont la position angulaire d'assemblage avec le raccord de connexion 5 est déterminée avec précision. Grâce à la flexibilité obtenue pour la fabrication des canalisations 7, on peut avantageusement utiliser des raccords de connexion 5 de formes standardisées dont le coût est réduit.

L'étape d'assemblage des canalisations 7 avec les raccords de connexion 5 est très simple à réaliser par un opérateur, ce qui limite le risque d'endommagement.

L'étape de positionnement du corps tubulaire creux rectiligne dans la machine de cintrage est de préférence réalisée manuellement. A cet effet, la machine de cintrage comporte un mécanisme de détrompage adapté pour coopérer avec le mécanisme de détrompage angulaire du deuxième organe de connexion rapide mécanique 8 dans la position de référence déterminée. En particulier, la machine de cintrage comporte un gabarit pour recevoir le deuxième organe de connexion rapide mécanique 8 dans la position angulaire de référence déterminée. Néanmoins, il va de soi que la machine de cintrage pourrait également détecter de manière automatique la position angulaire de référence du deuxième organe de connexion rapide mécanique 8, par exemple, au moyen d'un module de traitement d'images.

L'étape de cintrage est réalisée en fonction de la position de référence déterminée à partir de paramètres (angle de cintrage, rayon cintrage, inclinaison de l'angle de cintrage par rapport à la position de référence déterminée, longueur d'avancée du corps tubulaire, etc.). A titre d'exemple, au cours de l'étape de cintrage, une rotation du corps tubulaire creux autour de son axe peut être réalisée pour obtenir l'inclinaison de l'angle de cintrage définie pour l'opération de cintrage déterminée.

Selon un autre mode de mise en oeuvre, le deuxième organe de connexion 8 est monté après cintrage du corps tubulaire creux rectiligne.

Pour former un circuit de fluide, il suffit de faire coopérer le deuxième organe de connexion rapide mécanique 8 au premier organe de connexion rapide mécanique 6 pour relier de manière étanche, rapide et précise une canalisation 7 au raccord de connexion 5 comme illustré à la figure 8. De manière avantageuse, l'assemblage est réalisé sans outillage, de manière manuelle. La logistique est par ailleurs grandement facilitée, il n'est pas nécessaire de disposer d'un grand stock de dispositifs de calage dont l'encombrement est élevé. Grâce à l'invention, la réalisation d'un circuit de fluide est facilitée et le temps d'assemblage réduit. Au cours des essais, le temps d'assemblage a été réduit d'environ 80%.

## Revendications

1. Procédé de fabrication d'une canalisation (7) comportant un corps tubulaire creux cintré (70) comprenant deux ouvertures d'extrémité reliées fluidiquement et au moins un deuxième organe de connexion rapide mécanique (8), au niveau d'une ouverture d'extrémité, adapté pour coopérer avec un premier organe de connexion rapide mécanique (6) d'un raccord de connexion (5) comprenant un mécanisme de détrompage angulaire, ledit deuxième organe de connexion rapide mécanique (8) comportant un mécanisme de détrompage angulaire adapté pour coopérer avec le mécanisme de détrompage angulaire du premier organe de connexion rapide mécanique (6) du raccord (5) selon une position angulaire prédéterminée, le procédé comportant :
- une étape de solidarisation du deuxième organe de connexion rapide mécanique (8) à un corps tubulaire creux rectiligne,
- une étape de positionnement du corps tubulaire creux rectiligne dans une machine de cintrage de manière à ce que le mécanisme de détrompage angulaire du deuxième organe de connexion rapide mécanique (8) soit dans une position angulaire de référence par rapport à ladite machine de cintrage et
- une étape de cintrage du corps tubulaire creux rectiligne en fonction de ladite position angulaire de référence pour former le corps tubulaire creux cintré (70).

2. Procédé de fabrication selon la revendication 1 dans lequel la machine de cintrage comporte un mécanisme de détrompage adapté pour coopérer avec le mécanisme de détrompage angulaire du deuxième organe de connexion rapide mécanique dans la position angulaire de référence.

3. Procédé de fabrication selon l'une des revendications 1 à 2, dans lequel l'étape de positionnement du corps tubulaire creux rectiligne dans la machine de cintrage est réalisée manuellement.

4. Procédé de fabrication selon l'une des revendications 1 à 3, dans lequel l'étape de cintrage est réalisée en fonction de l'inclinaison de l'angle de cintrage par rapport à la position de référence déterminée.

## Patentansprüche

1. Herstellungsverfahren einer Kanalisation (7), aufweisend einen gebogenen rohrförmigen Hohlkörper (70), der zwei fluidisch verbundene Endöffnungen umfasst, und mindestens ein zweites mechanisches Schnellverbindungsorgan (8) im Bereich einer Endöffnung, das zum Zusammenwirken mit einem ersten mechanischen Schnellverbindungsorgan (6) eines Verbindungsanschlusses (5) geeignet ist, umfassend einen winkligen Unverwechselbarkeitsmechanismus, wobei das zweite mechanische Schnellverbindungsorgan (8) einen winkligen Unverwechselbarkeitsmechanismus aufweist, der zum Zusammenwirken mit dem winkligen Unverwechselbarkeitsmechanismus des ersten mechanischen Schnellverbindungsorgans (6) des Anschlusses (5) gemäß einer vorher festgelegten Winkelposition geeignet ist, wobei das Verfahren aufweist:
- einen Schritt des festen Verbindens des zweiten mechanischen Schnellverbindungsorgans (8) mit einem geraden rohrförmigen Hohlkörper,
- einen Schritt des Positionierens des geraden rohrförmigen Hohlkörpers in einer Biegemaschine derart, dass der winklige Unverwechselbarkeitsmechanismus des zweiten mechanischen Schnellverbindungsorgans (8) in einer Referenz-Winkelposition in Bezug auf die Biegemaschine ist, und
- einen Schritt des Biegens des geraden rohrförmigen Hohlkörpers in Abhängigkeit von der Referenz-Winkelposition, um den gebogenen rohrförmigen Hohlkörper (70) zu bilden.

2. Herstellungsverfahren nach Anspruch 1, wobei die Biegemaschine einen Unverwechselbarkeitsmechanismus aufweist, der zum Zusammenwirken mit dem winkligen Unverwechselbarkeitsmechanismus des zweiten mechanischen Schnellverbindungsorgans in der Referenz-Winkelposition geeignet ist.

3. Herstellungsverfahren nach einem der Ansprüche 1 bis 2, wobei der Schritt des Positionierens des geraden rohrförmigen Hohlkörpers in der Biegemaschine manuell durchgeführt wird.

4. Herstellungsverfahren nach einem der Ansprüche 1 bis 3, wobei der Schritt des Biegens in Abhängigkeit von der Neigung des Biegewinkels in Bezug auf die festgelegte Referenzposition durchgeführt wird.

## Claims

1. A method for manufacturing a piping (7) including a bent hollow tubular body (70) comprising two fluidly connected end apertures and at least one second mechanical quick coupling member (8), at an end aperture, adapted to cooperate with a first mechanical quick coupling member (6) of a coupling connector (5) comprising an angular foolproofing mechanism, said second mechanical quick coupling member (8) including an angular foolproofing mechanism adapted to cooperate with the angular foolproofing mechanism of the first mechanical quick coupling member (6) of the connector (5) at a predetermined angular position, the method including:
- a step of securing the second mechanical quick coupling member (8) to a rectilinear hollow tubular body,
- a step of positioning the rectilinear hollow tubular body in a bending machine such that the angular foolproofing mechanism of the second mechanical quick coupling member (8) is in a reference angular position with respect to said bending machine and
- a step of bending the rectilinear hollow tubular body said reference angular position to form the bent hollow tubular body (70).

2. The manufacturing method according to claim 1, wherein the bending machine includes a foolproofing mechanism adapted to cooperate with the angular foolproofing mechanism of the second mechanical quick coupling member in the reference angular position.

3. The manufacturing method according to one of claims 1 to 2, wherein the step of positioning the rectilinear hollow tubular body in the bending machine is made manually.

4. The manufacturing method according to one of claims 1 to 3, wherein the bending step is made as a function of the tilt of the bending angle with respect to the determined reference position.
